## Europäisches Patentamt

## European Patent Office

## Office européen des brevets

(19)

(11) Veröffentlichungsnummer: **0 377 802**
**A2**

(12)

# EUROPÄISCHE PATENTANMELDUNG

(21) Anmeldenummer: **89120495.0**

(22) Anmeldetag: **06.11.89**

(51) Int. Cl.⁵: **G01T 1/185**

(30) Priorität: **08.11.88 DE 8813940 U**

(43) Veröffentlichungstag der Anmeldung:
**18.07.90 Patentblatt 90/29**

(84) Benannte Vertragsstaaten:
**AT BE CH DE ES FR GB GR IT LI LU NL SE**

(71) Anmelder: **Nokia Unterhaltungselektronik
(Deutschland) GmbH
Östliche Karl-Friedrich-Strasse 132
D-7530 Pforzheim(DE)**

(72) Erfinder: **Werthmann, Günter
Stübecker Weg 18
D-5870 Hemer(DE)**

(54) **Taschenmessgerät zur Messung einer ionisierenden Strahlung.**

(57) Das Gehäuse (1) eines in der Tasche (2) eines Kleidungsstückes (3) einer zu überwachenden Person tragbaren Meßgerätes zur Messung einer auf diese Person einwirkenden ionisierenden Strahlung ist im Gehäuseverlauf im oberen Bereich des Gehäuses so aus der Längsrichtung (7) abgewinkelt, daß ein im abgewinkelten Gehäuseteil (8) angeordneter Strahlungsdetektor (10) zur Messung dieser Strahlung vor den übrigen Bauteilen (15, 16, 17) im Innern des des Meßgerätegehäuses liegt. Dadurch wird eine aus der Raumhalbkugel (18) des Raumes vor dem Meßgerät kommende ionisierende Strahlung zum Strahlungsdetektor hin nicht von Bauelementen des Meßgerätes abgeschattet und nicht richtungsabhängig verfälscht.

EP 0 377 802 A2

## Taschenmeßgerät zur Meßung einer ionisierenden Strahlung

Die Erfindung betrifft ein Taschenmeßgerät nach dem Oberbegriff des Anspruches 1.

Eine bekanntes derartiges Meßgerät von quaderförmiger Gestalt, das mittels eines Klips zusätzlich an der Tasche des Kleidungsstückes befestigbar ist, enthält an der aus der Tasche herausragenden Stirnwand eine Anzeigevorrichtung zur Anzeige der auf das Strahlungsmeßgerät einwirkenden und somit auch auf die das Meßgerät tragende Person einwirkende ionisierende Strahlung. Der Strahlungsdetektor, der die Intensität der auf ihn einwirkenden ionisierenden Strahlung in eine entsprechende elektrische Größ umsetzt, ist bei dem bekannten Meßgerät zwischen der Anzeigevorrichtung einerseits und den elektrischen und mechanischen Bauteilen innerhalb des Gehäuses des Meßgerätes andererseits angeordnet. Diese Bauteile schirmen jedoch die auf das Meßgerät einwirkende ionisierende Strahlung derart unterschiedlich auf ihrem Weg zum Strahlungsdetektor hin ab, daß die Empfindlichkeit des Strahlungsmeßgerätes für eine ionisierende Strahlung, die aus einer vor dem Meßgerät liegenden Raumhalbkugel auf das Gerät einwirkt, stark richtungsabhängig ist. Insbesondere Strahlungen aus dem oberen oder unteren Randbereich der Raumhalbkugel werden stark abgeschirmt, sodaß für diese Strahlung von dem Strahlungsdetektor ein Meßwert erzeugt wird, der die tatsächliche Intensität dieser Strahlung viel zu klein bewertet.

Vielfach arbeiten Personen in einem strahlungsgefährdeten Raum an einem Arbeitstisch oder dergleichen, auf dem sich Strahlungsquellen insbesondere im unteren Randbereich der Raumhalbkugel befinden. Da das von der Person getragene Strahlungsmeßgerät diese Strahlungsquellen nur gedämpft erfaßt, besteht die Gefahr, daß diese Person einer viel höheren Strahlenbelastung ausgesetzt war, als der Anzeige des Meßgerätes zu entnehmen ist.

Der Erfindung liege deshalb die Aufgabe zugrunde, ein Meßgerät der im Oberbegriff des Anspruches 1 angegebenen Art so auszugestalten, daß es aus der vor dem Meßgerät liegenden Raumhalbkugel auf das Meßgerät einwirkende ionisierende Strahlungen möglichst richtungsunabhängig mißt. Diese Aufgabe wird nach der Erfindung durch die im kennzeichnenden Teil des Anspruches 1 angegebenen Gestaltungsmerkmale gelöst.

Dadurch, daß der Strahlungsdetektor eines so gestalteten Meßgerätes im Kopf des abgewinkelten Gehäuseteils des Meßgerätes angeordnet ist, liegt in der Tragelage des Meßgerätes die Raumhalbkugel, deren Zentrum der Strahlungsdetektor ist, vor den anderen Bauteilen des Meßgerätes und wird nur noch von den Wänden des Gehäuses des Meßgerätes umschlossen. Diese erzeugen jedoch bei einer etwa durchgehend gleichmäßigen Wanddicke der Gehäusewände, was üblich ist, keine richtungsabhängige Itensitätsverringerung der das Gehäuse durchstrahlenden ionisierenden Strahlung. Zudem sind derartige Gehäuse üblicherweise aus einem ionisierende Strahlungen möglichst wenig dämpfenden Material hergestellt.

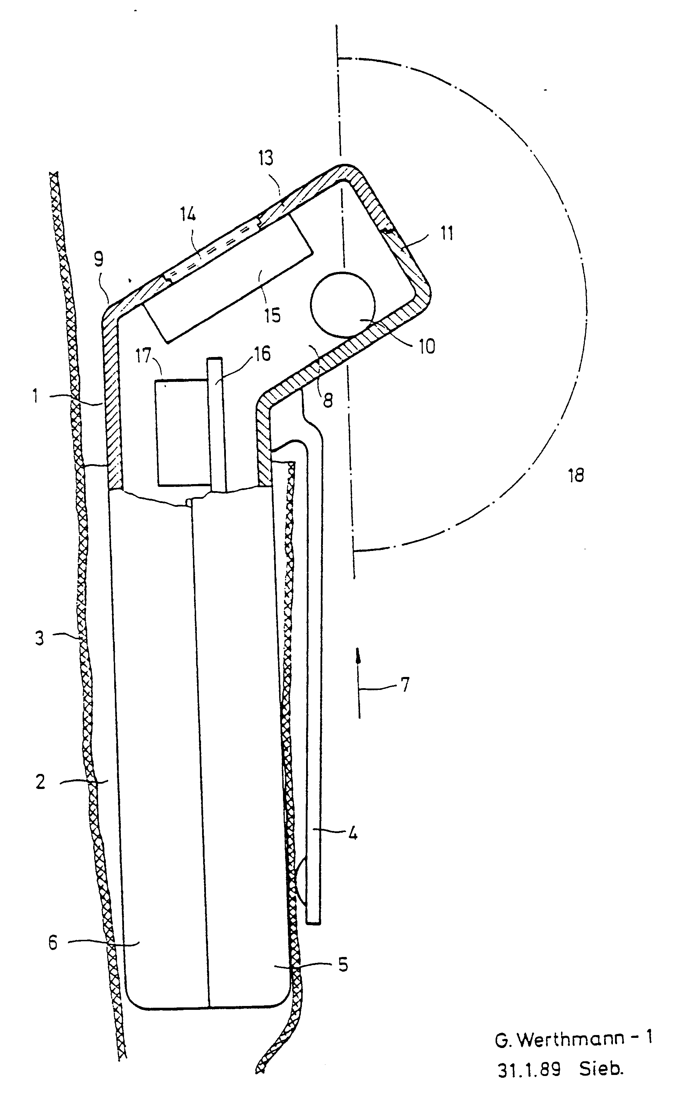

Die Erfindung wird nachfolgend anhand eines in der einzigen Figur der Zeichnung dargestellten Ausführungsbeispieles näher erläutert.

Das in der Zeichnung dargestellte Gehäuse 1 umschließt die Bauteile eines Strahlungsmeßgerätes, das die auf eine Person einwirkende ionisierende Strahlung mißt, und deshalb in eine Tasche 2 eines Kleidungsstückes 3 eingesteckt ist, das diese Person trägt, und das mit einem Klip 4 an dieser Tasche zusätzlich befestigt ist. Das Gehäuse 1 ist aus zwei Gehäuseschalen 5 und 6 hergestellt, die das in Tragerichtung länglich ausgebildete und in der Zeichnung von der Seite her dargestellte Gehäuse 1 des Meßgerätes bilden. In dem in der Längsrichtung 7 des Gehäuses oberen Bereich ist der Verlauf des Gehäuses 1 in einem bestimmten Winkel der Längsrichtung so abgeknickt, daß es in diesem Bereich einen abgewinkelten Gehäuseteil 8 bildet, der in dargestelltem Ausführungsbeispiel schräg nach oben aus der Kleidungstasche 2 herausragt. Zur besseren Erläuterung ist dieser Bereich des Gehäuses bis über den Abwinkelungsknick 9 des Gehäuses hinaus aufgebrochen dargestellt, so daß schematisch dargestellte Bauelemente des Strahlungsmeßgerätes erkennbar sind.

Der zur Strahlungsmessung erforderliche Strahlungsdetektor 10 des Meßgerätes, der unter der Einwirkung einer ionisierenden Strahlung elektrische Impulse einer von der Strahlungsintensität abhängigen Impulsrate erzeugt, ist im Bereich der Stirnwand 11 innerhalb des abgewinkelten Gehäuseteiles 8 des Meßgerätes angeordnet. Zwischen diesem Strahlungsdetektor 10 und dem Abwinkelungsknick 9 des Gehäuses 1 ist in der oberen Gehäusewand 13 des abgewinkelten Gehäuseteiles 8 ein Klarsichtfenster 14 eingelassen, hinter dem eine Anzeigevorrichtung 15 zur ziffernmäßigen Anzeige der von dem Strahlungsdetektor 10 gemessenen Intensität der auf das Meßgerät einwirkenden ionisierenden Strahlung angeordnet ist. Darunter ist schematisch eine Schaltungsplatte 16 des Meßgerätes mit einem Bauteil 17, beispielsweise einem Schallgeber dargestellt.

Der Strahlungsdetektor 10 des Strahlungsmeßgerätes ist durch seine Lage nahe der Stirnwand 11 des abgewinkelten Gehäuseteiles 8 so hervorragend angeordnet, daß ionisierende Strahlungen aus einer Raumhalbkugel 18 des Raumes vor dem Strahlungsmeßgerät, das sich im Zentrum dieser Raumhalbkugel 18 befindet, auf ihrem Weg zum Strahlungsdetektor 10 nicht von Bauelementen (15, 17) und Bauteilen 16 des Strahlungsmeßgerätes abgeschattet weden. Dadurch wird ein richtungsabhängiger Empfindlichkeitsverlust für die Intensitätsmessung durch den Strahlungsdetektor 17 vermieden.

**Ansprüche**

In der Tasche eines Kleidungsstückes tragbares Meßgerät zur Messung einer auf eine Person einwirkenden ionisierenden Strahlung mit einem das Meßgerät umgebenden Gehäuse, in dem ein Strahlungsdetektor angeordnet ist und das in einer der Person zugewandten Wand eine visuell ablesbare Anzeigevorrichtung enthält,
**dadurch gekennzeichnet,**
daß das länglich ausgebildete Gehäuse (1) einem Ende des Gehäuses zu in einem in bestimmtem Winkel aus der Längsrichtung (7) abgeknickten Gehäuseteil (8) fortgeführt ist,
daß der Strahlungsdektektor (10) im Bereich der Stirnwand (11) des abgewinkelten Teiles (8) des Gehäuses angeordnet ist
und daß die Anzeigevorrichtung (15) in der oberen Wand (13) des abgewinkelten Teiles (8) des Gehäuses zwischen dem Strahlungsdetektor und dem Abwinkelungsknick (9) des Gehäuses (1) angeordnet ist.

G. Werthmann - 1
31.1.89   Sieb.